(19) Europäisches Patentamt
European Patent Office
Office européen des brevets

(11) Numéro de publication: **0 614 156 A1**

(12) **DEMANDE DE BREVET EUROPEEN**

(21) Numéro de dépôt: **93401203.0**

(51) Int. Cl.5: **G06F 15/72**

(22) Date de dépôt: **11.05.93**

(30) Priorité: **04.03.93 FR 9302525**

(43) Date de publication de la demande: **07.09.94 Bulletin 94/36**

(84) Etats contractants désignés: **BE CH DE DK ES GB IT LI NL SE**

(71) Demandeur: **EUROCORE S.A.**
**39 boulevard Anatole France**
**F-93200 Saint-Denis (FR)**

(72) Inventeur: **Prevot, Gilles**
**133 rue Damrémont**
**F-75018 Paris (FR)**

(74) Mandataire: **Benech, Frédéric et al**
**Ernest Gutmann - Yves Plasseraud S.A.**
**3, rue Chauveau-Lagarde**
**F-75008 Paris (FR)**

(54) **Procédé et dispositif de montage de découpe d'image dans une page de document.**

(57) Il s'agit d'un procédé et d'un dispositif informatique de montage dans une page (10) d'au moins une découpe (11,12,12a) d'image. On place (14) la découpe d'image dans un espace virtuel mémoire d'image (15), on transforme (16) la description de la page de document décrite en mode vectoriel, en une description en mode Run Length, avec une résolution dite résolution de travail, puis on calcule (18) la taille de chaque pixel d'entrée de la découpe d'image à mettre en place, en nombre de pixels de travail, on calcule (20) l'adresse dans l'espace virtuel mémoire d'image (15) du premier pixel d'entrée de chaque segment Run Length, et pour chaque segment, on ajuste (23) la taille dudit premier pixel d'entrée en lui donnant une dimension en pixels de travail ajustée.

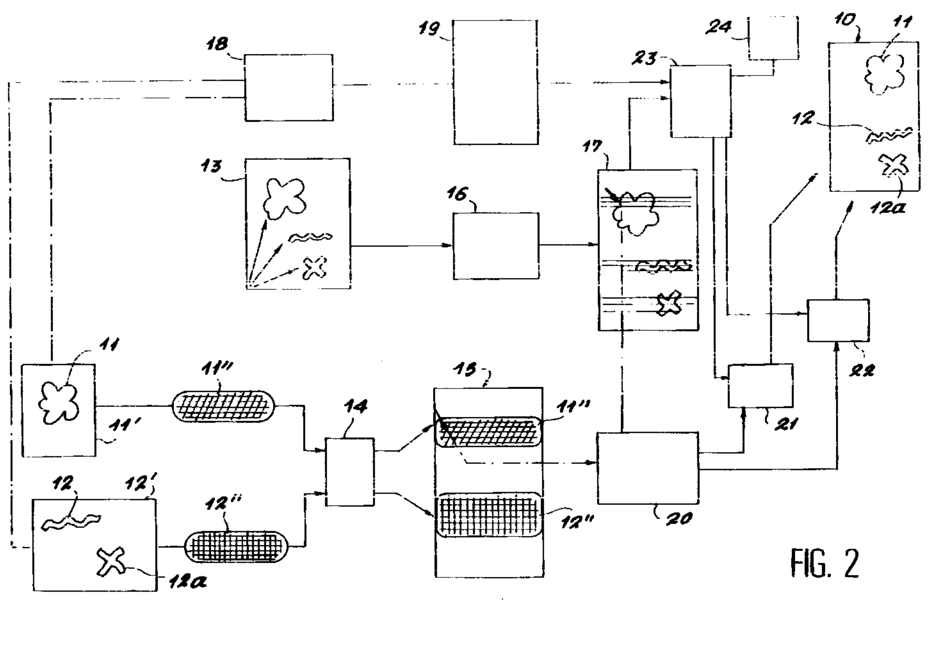


FIG. 2

EP 0 614 156 A1

La présente invention concerne un procédé et un dispositif informatique de montage ou mise en place d'au moins une découpe d'image dans une page de document, à partir d'un fichier descriptif de ladite image dans lequel chaque ligne de l,image est décrite en mode bitmap, selon une première résolution dite résolution en pixels d'entrée.

Elle permet également la mise en place d'à-plats de couleur ("benday" en terminologie anglosaxonne) dans une page de document, à partir de fichiers descriptifs des à-plats ou bendays.

Elle trouve une application particulièrement importante bien que non exclusive dans le domaine de la photogravure utilisant des micro-ordinateurs.

Une découpe d'image est définie par sa forme et son contenu. Elle est incluse dans une image qui est, quant-à-elle, toujours de forme rectangulaire.

Un à-plat ou benday est une zone de couleur uniforme.

En général un benday est décrit grâce à une méthode connue sous la dénomination anglosaxonne de "Run Length" (RL), qui consiste à décrire chaque ligne de benday en fonction de sa longueur et de sa couleur, les bendays se succédant séquentiellement les uns derrière les autres.

Deux modes existent par contre pour décrire ou pour générer une image.

- Le mode vectoriel (ou mode cartésien, ou balayage cavalier) qui permet de tracer des lignes d'un point à un autre, dans n'importe quelle direction. Ce mode convient bien à la description de la forme d'une découpe d'image, mais non de son contenu.

Le langage POSTCRIPT™ de la société américaine Adobe Systems Incorporated est un langage du type vectoriel qui permet les manipulations de base nécessaires à la création de graphiques avec un ordinateur de faible puissance.

Un langage de ce type sera par exemple utilisé avec l'invention mais va nécessiter à un moment donné la transformation de la représentation de l'image du mode vectoriel au mode point.

- Le mode point ("bitmap" en terminologie anglosaxonne ou balayage récurrent) qui consiste à décrire ou afficher l'image point par point (pixels) par un balayage ligne par ligne, comme sur un écran cathodique de télévision, de gauche à droite et de haut en bas.

Un tel balayage est également connu, dans la terminologie de l'homme du métier, sous le nom de "balayage raster". Typiquement, une imprimante électronique à laser, ou imprimante laser décrit une image par balayage raster.

Le balayage raster permet la description de la forme et du contenu de l'image avec de bons résultats.

Le balayage raster comporte cependant des inconvénients.

En effet la description d'une page en balayage raster est d'une part spécifique au périphérique d'impression utilisé, et d'autre part va occuper une taille importante en mémoire. De plus les calculs mathématiques nécessaires pour déterminer la valeur de chaque point demandent du temps et ne sont a priori pas possibles sur un ordinateur de faible puissance.

A partir du bitmap, il a donc été également développé une méthode de description des lignes d'image en mode "Run Length" (RL), qui consiste cette fois-ci à décrire chaque ligne d'image en fonction de sa longueur, mesurée en nombre de points ou pixels, et de sa couleur.

Autrement dit, décrire une ligne d'image en mode Run Length (pour définir ce qui est souvent appelé Vecteur Run Length) consiste à attribuer à ce vecteur une longueur donnée, et une opération déterminée à effectuer sur cette longueur donnée (par exemple remplir avec telle couleur).

Comme on va le voir, la présente invention utilise une telle méthode, qui permet ainsi de décrire de façon homogène à la fois les images et les bendays.

Avant de poursuivre il peut être utile de rappeler ci-après quelques définitions, afin d'éviter toute confusion.

Il ne faut tout d'abord pas confondre un point de trame de photogravure avec un point élémentaire ou pixel.

Un point de trame est constitué par un ensemble de pixels juxtaposés, formant une matrice de 16 (4x4) à 1600 (40x40) pixels, qui détermine le nombre de niveaux de gris possibles (gamme de valeurs) en fonction notamment de la définition du périphérique de sortie.

On a ainsi représenté, à titre d'exemple, une partie d'image 1 comprenant plusieurs lignes de trame 2, chacune composée de plusieurs points de trame 3, chacun constitué par un ensemble de pixels juxtaposés 4, eux même formant ce qu'on a appelé dans la présente invention des lignes d'image 5 (en trait mixte sur la figure).

A noter que lors de la reproduction d'une image en quadrichromie, le nombre de points de trame est multiplié par 2, 3 ou 4 selon le mélange de couleurs (Jaune, Cyan, Magenta et Noir).

Rappelons également que le pixel, ou point électronique élémentaire, est le plus petit élément que peut analyser le scanner, la caméra à couplage de charge etc, ou que peut restituer le scripter (imprimantes,

scanner de restitution, composeuse, etc).

Chaque image, qu'elle soit captée, par exemple par un scanner d'analyse, stockée en mémoire, ou restituée par un scripter, l'est avec une certaine définition ou résolution, faisant intervenir la notion de pixel, qui exprime la finesse du détail du graphisme de l'image captée, stockée ou restituée.

En ce qui concerne les scanners et les scripters, l'expression chiffrée de cette définition s'effectue ainsi en points ou pixels par pouce (ppp), ou dot par inch (dpi) en terminologie anglosaxonne. Elle peut aller jusqu'à 3400 ppp (soit 14 points par mm).

La définition des trames s'effectue quant-à-elle en lignes par centimètre (correspondant à des pixels par $cm^2$).

L'un des problèmes rencontrés lors du montage d'une page de document provient notamment des définitions différentes entre images à assembler et/ou le scripter utilisé pour restituer la page de document une fois montée.

On connaît déjà des procédés et des dispositifs qui permettent la mise en place ou le montage d'images et/ou de bendays dans une page de document à partir d'un fichier informatique descriptif des différentes lignes des images et/ou des bendays.

Un procédé connu consiste par exemple à créer l'image de façon programmée, en la générant comme on l'a vu en mode vectoriel. Une telle méthode qui peut être mise en oeuvre avec des ordinateurs de faible puissance, comme par exemple un micro-ordinateur connu sous la dénomination PC, comportant un microprocesseur 80386 de la société américaine INTEL, d'une part est longue et d'autre part ne permet pas la représentation de demi-tons, ce qui n'autorise donc pas d'image en dégradés de gris ou de couleurs, ni le montage de benday.

Un autre procédé connu consiste à multiplexer ou mélanger un plan image et/ou benday construit en Run Length, avec un plan masque dans lequel on a introduit une couleur dite transparente, pour créer ainsi une image résultante par superposition.

Un tel procédé demande cependant de manipuler l'image ou les images, ce qui nécessite des temps et des moyens de traitement importants.

La présente invention vise à fournir un procédé et un dispositif informatique de montage de découpe d'images et/ou de bendays dans une page de document, répondant mieux que ceux antérieurement connus aux exigences de la pratique, notamment en ce qu'elle permet une mise en place de découpes d'image de définition ou résolution différentes, de façon extrêmement précise, sans manipulation des informations d'images, ce qui évite notamment des temps et des moyens de traitement importants.

Ainsi, avec la présente invention, il va être possible de générer, avec un micro-ordinateur du type PC muni d'un microprocesseur 80486 d'INTEL et de 16 mégaoctets de mémoire vive, une page de document type format A4 avec une résolution à 1600 ppp en un temps de l'ordre de l minute.

La sortie de document sous forme de page de document de grande dimension, par exemple de 1 m 50 x 1 m 20 devient par ailleurs possible avec une excellente résolution et des temps de traitement tout à fait acceptables.

Pour ce faire l'invention part d'une idée entièrement nouvelle basée sur la combinaison de trois éléments :

- la description de la page de document en mode Run Length (mode connu en lui-même);
- une longueur de chaque ligne d'image ramenée à un nombre de "pixels élémentaires" ou "pixels de travail".

Par exemple, si le pixel de travail correspond au point élémentaire d'une résolution de 1600 ppp, la taille d'un pixel d'image scannée avec une résolution de 200 ppp sera

$$\frac{1600}{200} = 8 \text{ pixels de travail}$$

et la longueur d'une ligne d'image de 30 pixels d'images sera donc de 240 ;

- l'indexation de chaque pixel de chaque ligne d'image et donc de découpe d'image dans un "espace virtuel" (mémoire) de façon extrêmement précise avec attribution d'une taille en pixel de travail à chaque pixel d'entrée de chacune desdites lignes d'image.

L'image est quant à elle initialement stockée dans la mémoire en mode bitmap, dans un fichier dit fichier de data, en étant par exemple codée sur 32 bits ce qui permet un espace virtuel de 4 gigapixels.

En fonction de la définition du scripter de sortie, l'image définie en pixels de travail est ensuite recalculée pour générer l'image en balayage raster avec ladite définition de sortie, c'est-à-dire en pixels dit pixels de sortie.

Dans ce but l'invention propose essentiellement un procédé informatique de montage, dans une page de document, d'au moins une découpe d'image, ladite image étant stockée dans un fichier en mode bitmap dit fichier de data, selon une première résolution dite résolution en pixels d'entrée,
ladite page de document étant préalablement décrite dans un fichier spécifique en mode vectoriel dit premier fichier d'instructions,
caractérisé en ce que

- on place chaque image dans un espace virtuel mémoire d'image, en affectant au début du fichier data correspondant à ladite image une adresse dans ledit espace virtuel mémoire d'image,
- on transforme la description de la page de document décrite en mode vectoriel dans le premier fichier d'instructions, en une description en mode Run Length stockée dans un second fichier d'instructions, avec une résolution dite résolution de travail,
- on calcule la taille de chaque pixel d'entrée de la découpe d'image à mettre en place, en nombre de pixels correspondant à ladite résolution de travail, dits pixels de travail, que l'on stocke dans un fichier dit fichier complémentaire,
- on calcule l'adresse dans l'espace virtuel mémoire d'image du pixel d'entrée, dit premier pixel d'entrée, situé au début de chaque segment de ladite découpe dont la longueur en mode Run Length est définie en pixel de travail, et
- pour chaque segment, on ajuste la taille dudit premier pixel d'entrée en lui donnant une dimension en pixels de travail correspondant à la longueur de la portion de segment comprise entre le début dudit segment et le début du pixel d'entrée suivant ledit premier pixel d'entrée, le chemin de progression à l'intérieur dudit segment pour obtenir les pixels d'entrée suivants ayant été préalablement défini,
  de sorte que la position de ladite découpe d'image décrite en mode Run Length est ainsi parfaitement définie dans la dite page de document.

En effet, on connaît la place de la découpe d'image dans l'espace virtuel mémoire d'image, et on connaît la place et la taille des premiers pixels d'entrée de chaque segment de découpe d'image décrit en mode Run Length.

Il suffit donc ensuite par itération, en fonction de la définition du cheminement, de décrire chaque segment de la découpe qui est ainsi parfaitement placée dans la page de document.

Dans des modes de réalisation avantageux on a de plus recours à l'une et/ou à l'autre des dispositions suivantes :

- à chaque calcul d'adresse et ajustement de taille d'un premier pixel d'entrée, on envoie ledit premier pixel d'entrée et les pixels suivants dudit segment décrit en mode Run Length sur une unité de sortie ;
- à chaque calcul d'adresse et ajustement de taille d'un premier pixel d'entrée, on stocke ledit premier pixel d'entrée et les pixels suivants dudit segment décrit en mode Run Length dans un fichier intermédiaire ;
- la page de document comprenant également au moins un benday, on calcule l'adresse du début de chaque ligne dudit benday, dans un espace virtuel extrait du second fichier d'instructions englobant ledit benday,
  de sorte que la position dudit benday décrit en mode Run Length est également parfaitement définie dans la page de document;
- on superpose au moins en partie un benday à une découpe d'image, en affectant à un segment de découpe d'image en mode Run Length une couleur ainsi qu'un coefficient de transparence pour permettre la fusion de l'image de la découpe avec ladite couleur;
- on effectue un traitement algorithmique sur les adresses des premiers pixels d'entrée de la découpe d'image ou des débuts de ligne du benday.

Un tel traitement algorithmique utilise des algorithmes connus en eux-mêmes, comme par exemple un algorithme de rotation, qui permet une rotation de l'image de 90°, 180° ou 270°.

A noter qu'un des avantages importants de l'invention qui travaille sur les adresses et non sur les images, est justement de permettre ce type de traitement de façon extrêmement rapide et peu coûteuse en moyens.

- on effectue un traitement algorithmique sur le chemin de progression à l'intérieur des segments de découpe d'image.

Ici encore les algorithmes utilisés sont de type connu.

- on effectue un traitement algorithmique sur la taille des pixels d'entrée.

Un tel traitement peut par exemple autoriser un effet de loupe sur une partie de la découpe.

- on applique le procédé au montage de page de dimensions supérieure à $1m^2$, avec une résolution supérieure ou égale à 1200 ppp.

Comme on l'a vu, c'est là une des applications tout à fait intéressante de l'invention qui va permettre d'obtenir des affiches de 4m x 5m par exemple d'une résolution de 1600 ppp, ce qui n'a jamais été obtenu industriellement à ce jour.

- on applique le procédé à l'imposition.

Rappelons que l'imposition consiste à ordonnancer les pages de document d'un ouvrage selon une disposition permettant de les retrouver assemblées dans l'ordre logique après pliure.

Il s'agit là encore d'une application très importante, qui va permettre des gains importants en productivité.

- on applique le procédé au grossissement / amaigrissement (spread and choke en terminologie anglosaxonne).

L'invention propose également un dispositif informatique de montage, dans une page de document, d'au moins une découpe d'image, ladite image étant stockée dans un fichier en mode bitmap dit fichier de data, selon une première résolution dite résolution en pixels d'entrée,
ladite page de document étant préalablement décrite dans un fichier spécifique en mode vectoriel dit premier fichier d'instructions,
caractérisé en ce que il comporte

- des moyens pour stocker chaque image dans un espace virtuel mémoire d'image, en affectant au début du fichier data correspondant à ladite image une adresse dans ledit espace virtuel mémoire d'image,
- des moyens de transformation de la description de la page de document décrite en mode vectoriel dans le premier fichier d'instructions, en une description en mode Run Length stockée dans un second fichier d'instructions, avec une résolution dite résolution de travail,
- des moyens de calcul de la taille de chaque pixel d'entrée de la découpe d'image à mettre en place, en nombre de pixels correspondant à ladite résolution de travail, dits pixels de travail, et des moyens de stockage de ladite taille dans un fichier dit fichier complémentaire,
- des moyens de calcul de l'adresse, dans l'espace virtuel mémoire d'image, du pixel d'entrée, dit premier pixel d'entrée, situé au début de chaque segment de ladite découpe dont la longueur en mode Run Length est définie en pixel de travail,
- des moyens propres à ajuster la taille dudit premier pixel d'entrée en lui donnant une dimension en pixels de travail correspondant à la longueur de la portion de segment comprise entre le début dudit segment et le début du pixel d'entrée suivant ledit premier pixel d'entrée, et
- des moyens pour définir pour chaque segment un chemin de progression du dit segment pour obtenir les pixels d'entrée suivants dudit premier pixel d'entrée,

de sorte que la position de ladite découpe d'image décrite en mode Run Length est ainsi parfaitement définie dans la dite page de document.

Dans des modes de réalisation avantageux le dispositif comporte de plus l'une et/ou à l'autre des dispositions suivantes :

- une unité de sortie en direct, à chaque calcul d'adresse et ajustement de taille d'un premier pixel d'entrée, dudit premier pixel d'entrée et des pixels suivants dudit segment décrit en mode Run Length ;
- des moyens de stockage, à chaque calcul d'adresse et ajustement de taille d'un premier pixel d'entrée, dudit premier pixel d'entrée et des pixels suivants dudit segment décrit en mode Run Length dans un fichier intermédiaire;
- la page de document comprenant également au moins un benday, des moyens de calcul de l'adresse du début de chaque ligne dudit benday, dans un espace virtuel extrait du second fichier d' instructions englobant ledit benday,
  de sorte que la position dudit benday décrit en mode Run Length est également parfaitement définie dans la page de document;
- des moyens de superposition d'au moins une partie de benday avec une découpe d'image, agencés pour affecter à un segment décrivant une découpe d'image en mode Run Length une couleur ainsi qu'un coefficient de transparence pour permettre la fusion de la découpe d'image avec ladite couleur;
- des moyens de traitement algorithmique des adresses des premiers pixels d'entrée de la découpe d'image ou des débuts de ligne du benday;
- des moyens de traitement algorithmique du chemin de progression;
- des moyens de traitement algorithmique de la taille des pixels d'entrée;

- des moyens agencés pour permettre le montage de page de dimensions supérieure à $1m^2$ avec une résolution supérieure ou égale à 1200 ppp;
- des moyens agencés pour permettre l'imposition.

L'invention sera mieux comprise au vu de la description qui suit d'un mode de réalisation particulier, donné à titre d'exemple non limitatif.

Elle se réfère aux dessins qui l'accompagnent dans lesquels :

- La figure 1, déjà décrite est un schéma de principe explicatif du point de trame.
- La figure 2 est un schéma de principe du procédé selon le mode de réalisation de l'invention plus particulièrement décrit ici.
- La figure 3A est une représentation graphique illustrant une étape du procédé selon l'invention, à savoir la transformation entre mode vecteur et mode bitmap.
- La figure 3B est une représentation graphique illustrant une autre étape du procédé selon l'invention, à savoir le calcul de l'adresse du premier pixel d'entrée.
- La figure 3C est une représentation graphique illustrant une autre étape du procédé selon l'invention, à savoir le calcul de la taille du premier pixel d'entrée.
- La figure 4 est un schéma de principe d'un dispositif selon un mode de réalisation de l'invention.
- La figure 5 est un schéma montrant le traitement d'une ligne d'image en mode Run Length selon le mode de réalisation de l'invention plus particulièrement décrit ici.
- La figure 6 est un exemple de page formée avec le procédé selon l'invention.
- La figure 7 est un schéma détaillé du dispositif de la figure 4.

La figure 2 illustre schématiquement le procédé de montage dans une page 10 de document, des découpes 11, 11 et 12a, appartenant respectivement aux images 11' et 12', chacune stockée en mode bitmap dans un fichier 11" et 12" respectif, dit fichiers de data.

Chaque fichier de data est décrit avec une résolution initiale déterminée, dite résolution en pixels d'entrées, résolution qui peut bien entendu varier d'une image à l'autre.

La page 10 de document que l'on souhaite obtenir avec une ou plusieurs résolutions de sortie déterminées, est par ailleurs préalablement décrite en mode vectoriel dans un fichier spécifique 13 dit premier fichier d'instructions.

Cette première description en mode vectoriel ne permet donc pas de décrire le contenu des images et découpes d'image, mais simplement leur forme.

Dans le procédé de l'invention selon le mode de réalisation plus particulièrement décrit ici, on place (opération 14) chaque fichier de data 11" et 12" dans un espace virtuel mémoire d'image 15 (qui peut être un espace réel dans le cas d'une seule image à placer) c'est à dire qu'on stocke lesdits fichiers de data dans ledit espace virtuel mémoire d'image en affectant une adresse dans l'espace virtuel mémoire d'image au début de chaque fichier de data, dite adresse raster. Le stockage peut par exemple être du type RAM.

On transforme par ailleurs, (opération 16), la description de la page de document décrite en mode vectoriel dans le premier fichier d'instructions 13, en une description en mode Run Length stockée dans un second fichier d'instructions 17, avec une résolution dite résolution de travail qui sera en général supérieure à la résolution exprimée en pixels d'entrée.

On calcule de plus (opération 18) la taille de chaque pixel d'entrée de l'image (et donc de la découpe d'image) à mettre en place, en nombre de pixels de travail correspondant à ladite résolution de travail, que l'on stocke dans un fichier 19 dit fichier complémentaire.

Ce fichier peut par exemple être le fichier dit fichier de recouvrement (overlay en terminologie anglosaxonne) du fichier 15.

Dans la plupart des cas la taille des pixels d'entrée, en dehors du premier et du dernier pixel d'un même segment de découpe d'image décrit en mode Run Length, encore appelé en abrégé "segment Run Length", sera d'ailleurs constante pour une même découpe d'image.

On calcule ensuite (opération 20) l'adresse dans l'espace virtuel mémoire d'image 15, du premier pixel d'entrée de chaque segment Run Length dont la longueur est décrite en pixels de travail, que l'on stocke dans un fichier 21 ou que l'on envoie directement sur une unité de sortie 22 qui va par exemple éditer par l'intermédiaire d'un scanner de résolution de sortie déterminée, la page de document 10, les opérations suivantes étant par ailleurs effectuées pour permettre une telle édition.

Pour chaque segment la taille du premier pixel d'entrée est calculée (opération 23) à partir du second fichier d'instruction 17 et du fichier complémentaire 19, en lui donnant une dimension en pixels de travail correspondant à la longueur de la portion de segment comprise entre le début du segment et le début du pixel d'entrée suivant.

Le chemin de progression à l'intérieur dudit segment est quant à lui par ailleurs défini (opération 24) pour obtenir les pixels d'entrée suivant le premier pixel d'entrée.

Il s'agira souvent d'un traitement algorithmique simple par exemple d'itération.

On va maintenant décrire plus précisemment ci-après, en référence aux figures 3A à 3C, les principes mis en oeuvre dans les étapes du procédé selon le mode de réalisation de l'invention plus particulièrement décrit ici.

TRANSFORMATION DU MODE VECTEUR EN MODE RUN LENGTH

Il s'agit ici de l'opération 16, qui consiste donc à transformer le contenu du premier fichier d'instructions 13 décrit en mode vectoriel, en un second fichier d'instructions 17 décrit en mode Run Length, et donc pour une découpe d'image, en un mode du type bitmap. Une telle transformation est parfois dénommée par l'homme du métier transformation raster ou rasterisation.

On a représenté sur la figure 3A la forme 30 d'une découpe d'image, représentée dans une page 31 en fonction d'un repère orthonormé 32 donnant les coordonnées géométriques de ladite forme dans ladite page de document représentée en mode vectoriel.

Le sens du segment Run Length issu de cette transformation est donné selon Ox, le sens de balayage des lignes Run Length étant selon Oy. L'unité de longueur est exprimée en pixel de travail.

L'équation de la droite du Run Length est :

$$Y = K$$

(K variant selon la ligne de Run Length à générer).

L'équation de la forme géométrique de la découpe d'image est :

$$Y = F(X).$$

Nous avons donc à résoudre l'équation suivante :

$$F(X) - K = 0$$

La résolution de cette équation fournit des solutions $X_0$, $X_1$, $X_2$, $X_3$...(voir figure 3A), qui sont ordonnées : $X_0<X_1<X_2<X_3$...

On obtient ainsi les segments Run Length suivants :

$RL_0 = X_0 - 0$
$RL_1 = X_1 - X_0$
$RL_2 = X_2 - X_1$
$RL_3 = X_3 - X_2$

PRINCIPE DE CALCUL DE LA TAILLE DES PIXELS

Il s'agit ici de l'opération 18 en référence à la figure 2.

La résolution s'exprime par le nombre de pixels nécessaire pour couvrir une longueur donnée, soit donc un nombre de pixels/longueur de référence.

Soit un pixel dont la résolution est :

$$\frac{Xp}{Lp}$$

En unité de mesure commune la taille du pixel d'entrée de l'image est de Xp x Lt = Ip et la taille du pixel de travail et de Xt x Lp = Ip.

La taille du pixel d'entrée est donc de Ip/It.

Comme on travaille en nombre entier, et que Ip/It est fractionnaire, il convient d'approximer sur plusieurs pixels dans la ligne Run Length. Soit MX le nombre de pixels de donnée d'image selon Ox pour cette image, un programme en pseudo-code pour ce calcul peut par exemple s'écrire:

R = 0
I = 0 CONT:

T(I) = partie entière de [(Ip + R)/It] ;
RI = reste de [(Ip + R)/It] ;
R = RI ;
I = I + 1

IF I différent de MW GOTO CONT.

On obtient ainsi une suite T(I), la somme des T(I) (pour I = 0 à I = MX-1) divisée par MX approximant Ip/It.

CALCUL DE L'ADRESSE DU 1er PIXEL D'UN SEGMENT RUN LENGHT IMAGE AINSI QUE DE SA TAILLE

Il s'agit ici de l'opération 20 de la figure 2, qui va être plus particulièrement décrite en référence aux figures 3B et 3C.

Soit $X_0$,$Y_0$ les coordonnées de début de l'image 40 dans la page 41 repérée dans le repère orthonormé 42 et contenant la découpe 43 présentant, dans l'exemple de la figure 3B, une forme ovale 44.

Soit $X_1$, $Y_1$ les coordonnées du segment Run Length 45 de la découpe d'image.

On calcule $X_0$-$X_1$, $Y_0$-$Y_1$ c'est-à-dire les coordonnées du début 46 du segment Run Length par rapport au début 47 de l'image.

En se reportant notamment à la figure 3C , on voit qu'on a :

IXp = Ip/It,

qui donne la taille du pixel d'entrée de l'image en pixels de travail.

On calcule les coordonnées en Oy de la ligne de l'image utilisée, c'est-à-dire que l'on calcule la partie entière de ($Y_0$-$Y_1$)/IXp = Li.

On calcule les coordonnés en Ox de la colonne de l'image utilisée, c'est-à-dire que l'on calcule la partie entière de ($X_0$-$X_1$)/IXp = Ci.

Soit CMi le nombre de pixels en horizontal dans la découpe d'image.

Soit BSi l'adresse du 1er pixel de la découpe d'image dans l'espace virtuel mémoire d'image 15.

L'adresse du pixel est alors : (Li x CMi) + Ci + BSi.

La taille du 1er pixel est quant-à elle, donnée par le reste de la division : ($X_0$-$Y_1$)/IXp.

PRINCIPE DE L'INDEXATION DE L'IMAGE

Nous avons vu comment calculer la position et la taille (ajustement) du premier pixel de donnée de découpe d'image.

Le schéma de traitement des pixels suivants (opération 24 de la figure 2) est alors et par exemple le suivant:

RL : taille du segment Run Length de la découpe d'image à placer dans la page de document
AD : adresse du 1er pixel dudit segment
TP1 : taille ajustée du 1er pixel
ADR__PX : adresse des pixels
RL__FM : partie de segment Run Length restant à couvrir dans la découpe
TP(ADR__PX) : taille du pixel de l'adresse ADR__PX TPX : taille de pixel (variable temporaire)
Programme (pseudo-code)

```
    RL__FM = RL
    ADR__PX = AD
    TPX = TP1
CONT:
    IFRL__FM<TPX alors TPX = RL__FM
    SEND (ADR__PX, TPX) (envoyer sur l'unité le
    pixel qui est à l'adresse ADR__PX, TPX fois)
    RL__FM = RL__FM - TPX ADR__PX = ADR__PX + 1 ; pixel suivant
    TPX = TP(ADR__PX) ; taille du nouveau pixel
IF PL__FM différent de 0 GO TO CONT:
```

Fin du traitement du segment Run Length.

La découpe d'image est considérée comme complètement définie à partir du moment où la position exacte de chaque pixel d'entrée de l'image incluse dans la découpe peut être identifiée dans la page de

document, ou encore si on peut affecter à chaque pixel de travail de la page de document, couvert par la découpe, un contenu pixel d'entrée d'image.

Ceci est donc obtenu avec le procédé tel que décrit puisque les étapes décrites permettent de positionner avec précision dans la portion de droite couverte par le segment de Run Length, chaque pixel de la découpe de l'image.
Le premier pixel de la découpe se voit affecter la taille calculée du premier pixel d'entrée (en pixels de travail), le second pixel une taille de pixel d'entrée également calculée et stockée, rappelons le, en mémoire complémentaire, et ainsi de suite jusqu'à ce que le segment Run Length soit complétement rempli selon le chemin de progression défini (opération 24 sur la figure 2).

Il va maintenant être décrit un mode de réalisation d'un dispositif 50 de mise en oeuvre du procédé selon l'invention en référence à la figure 4.

Le dispositif 50 plus particulièrement décrit ici comprend par exemple une carte 51 connectable au bus d'un micro-ordinateur, par exemple un PC muni d'un microprocesseur du type 80486 d'INTEL, et de 16 mégaoctets de mémoire vive.

Cette carte permet le montage d'une page comprenant des images et/ou des bendays à partir de fichiers descriptifs ou fichiers de data 52 décrits en mode bitmap des différentes lignes de ces images et bendays.

Ces fichiers 52 doivent bien évidemment être suffisamment précis pour permettre le montage.

La carte 51 est équipée des circuits ou éléments suivants :

- une mémoire tampon 53, ou buffer en terminologie anglosaxonne, propre à stocker les instructions de commande de description de la page.
- deux unités de traitement 54 et 55, correspondant respectivement aux traitements d'une part d'une image ou découpe d'image, ci-après désigné par commande raster (54), et d'autre part de benday, ci-après désigné par commande benday (55) ;
- une mémoire image 56 (RAM) constituant l'espace virtuel mémoire d'image, avec un coefficient de zoom en recouvrement (overlay en terminologie anglosaxonne), recouvrement qui constitue alors avantageusement le fichier intermédiaire dans lequel sont notamment stockés les tailles des pixels d'entrée et autres paramètres des découpes d'image et/ou des bendays ;
- un dispositif 57 mélangeur d'image ou de découpes d'image avec du benday ;
- un dispositif de sortie 58, comprenant des moyens de conversion du mode Run Length en mode bitmap agencés pour rendre la résolution de page de document indépendante de celle de l'unité de sortie, une mémoire 60 (RAM) de stockage de la page de document, suivi par exemple de moyens 61 de conversion et de regroupement qui viennent attaquer l'unité de sortie 62 connue en elle-même qui peut être une table traçante, une imprimante laser, etc.

Avantageusement l'unité de sortie permet une résolution de sortie élevée, par exemple supérieure à 1200 ppp.

Comme on va le voir ci-après, la mémoire image 56 inclut par ailleurs un fichier 63 dit table de couleur, et un fichier 64 dit table de transparence.

## COMMANDE RASTER

Cette commande concerne le montage précis au pixel de travail près avec des images de résolutions différentes.

La taille de chaque pixel d'entrée est chargée dans une mémoire ou plan complémentaire de la mémoire ou plan image sur 8 bits.

Ce plan complémentaire peut être préchargé avant le démarrage de l'exposition qui donne la page de document finalisée (A DEFINIR) aussi bien que dynamiquement pendant l'exposition, mais il est préférable d'utiliser toujours la même zone de mémoire pour des images de même résolution afin d'éviter un calcul et un rechargement du plan complémentaire de la mémoire image 56 en pleine exposition.

Notons que, dans l'espace PC, la mémoire image en pixels est une zone adressable de 4 à 16 mégaoctets (1 à 4 mégapixels), adressable par banc de 4 mégaoctets. Le plan complémentaire est une zone adressable de 1 à 4 mégaoctets, adressable par banc de 1 mégaoctet, les mémoires image en pixels et complémentaire étant couplées et commandées identiquement.

La commande raster ainsi que benday s'effectue par des mots de 64 bits organisés dans une mémoire de 16 bits (soit 4 mots de 16 bits).

| | | |
|---|---|---|
| 1er mot | bits 0-1 | taille en pixel de travail du RL (MSB) |
| | bits 2-7 | commande |
| | bits 8-f | taille du premier pixel en pixel de travail |
| 2ème mot | bits 0-f | taille en pixel de travail du RL (LSB) |
| 3ème mot | bits 0-f | adresse du premier pixel (LSB) |
| 4ème mot | bits 0-f | adresse du premier pixel (MSB) |

La méthode de traitement d'un segment (comprenant 68 pixels d'entrée) de découpe d'image en mode Run Length (RL) par balayage raster, est reproduite en figure 5.

Le registre 65 donne le pixel d'entrée dans l'espace virtuel mémoire d'image 66 du segment de découpe concerné.

Le registre 67 donne la taille des pixels d'entrée en pixel de travail dans le fichier complémentaire 68 (ici le plan overlay), fichier complémentaire qui comporte par ailleurs une ligne 69 donnant la taille en pixels de travail dudit segment et un registre 70 donnant la taille du premier pixel d'entrée et par extension du dernier pixel d'entrée dudit segment.

L'adresse du premier pixel d'entrée est indiquée dans le registre 71.

Enfin, la commande définissant le cheminement pour décrire le segment Run Length est également précisée, comme attribut dudit segment dans le fichier 68.

Dans l'exemple de la figure 5, les éléments de ce segment RL sont :

- Longueur : 2000 décimales
- Taille du 1er pixel : 12 décimales
- Adresse : A0015F hexa
- Commande : COMMANDE RASTER + ADRESSE INCREMENTE

L'adresse de l'image en bitmap doit être une adresse unique, elle est codée sur 32 bits ce qui permet un espace virtuel mémoire d'image de 4 gigapixels. Dans cet espace virtuel mémoire d'image sont réparties toutes les images concernant le montage.

Mais lors de la "sortie" de l'espace virtuel mémoire d'image de 1 à 4 mégapixels, on disposera seulement dans la mémoire les portions d'image utiles à la sortie en fonction des lignes qui sont en train d'être exposées, pour des raisons de place.

POur ce faire on transcode l'adresse virtuelle en adresse physique en fonction de l'organisation adoptée pour la mémoire, et de la ligne exposée.

En plus du fichier complémentaire qui vient d'être décrit, il est prévu une table de relation entre les adresses virtuelles et les découpes d'images leur correspondant, ainsi que la résolution de ces découpes d'images.

Ainsi l'adresse A0015F correspondra par exemple à une image de résolution 350 PPP à l'adresse 15F. La table de correspondance permet en effet cette relation.

COMMANDE BENDAY OU A-PLAT DE COULEUR

Dans le mode de réalisation plus particulièrement décrit ici il existe deux types de commande benday :

- Commande BENDAY PUR
- Commande BENDAY MERGE

La commande benday pur permet de tracer sur la page de document un benday simple en pleine teinte ou en demi teinte (full ou half tone en terminologie anglosaxonne).

La commande benday merge permet de tracer sur la page de document le résultat d'un mixage d'un benday et d'une découpe d'image dite raster en fonction d'un coefficient de transparence.

Cette transparence peut être identique dans toutes les couleurs (transparence globale) ou différente selon les couleurs (transparence sélective).

Il existe par exemple trois formats de commande BENDAY :

FORMAT COURT :

| Longueur : 32 bits (4 octets) | | |
|---|---|---|
| 1er mot | bits 0-1 | taille en pixel de travail (MSB) |
| | bits 2-7 | commande |
| | bits 8-f | pointeur dans une table de couleur |
| 2ème mot | bits 0-1 | taille en pixels de travail du RL (LSB) |

FORMAT STANDARD :

| Longueur : 64 bits (8 octets) | | |
|---|---|---|
| 1er mot | bits 0-1 | taille en pixels de travail du RL (MSB) |
| | bits 2-7 | commande |
| | bits 8-f | coefficient de **transparence** (transparence globale) ou pointeur dans une table des coefficients de transparence **(transparence** sélective) |
| 2ème mot | bits 0-f | taille en pixel de travail du RL (LSB) |
| 3ème mot | bits 0-7 | valeur du jaune |
| | bits 8-f | valeur du magenta |
| 4ème mot | bits 0-7 | valeur du cyan |
| | bits 8-f | valeur du noir |

FORMAT LONG :

(Benday merge uniquement, transparence sélective)

| Longueur : 96 bits (12 octets) | | |
|---|---|---|
| 1er mot | bits 0-1 | taille en pixel de travail du RL (MSB) |
| | bits 2-7 | commande |
| | bits 8-f | spare |
| 2ème mot | bits 0-f | taille en pixels de travail du RL (LSB) |
| 3ème mot | bits 0-7 | valeur du jaune |
| | bits 8-f | valeur du magenta |
| 4ème mot | bits 0-7 | valeur du cyan |
| | bits 8-f | valeur du noir |
| 5ème mot | bits 0-7 | coefficient de transparence dans le jaune |
| | bits 8-f | coefficient de transparence dans le magenta |
| 6ème mot | bits 0-7 | coefficient de transparence dans le cyan |
| | bits 8-f | coefficient de transparence dans le noir |

Table de couleur

Il existe par exemple une table de couleur à 256 entrées permettant de coder en format court les commandes BENDAY.

La table a 40 bits de champ, 32 bits de couleur et 8 bits de transparence.

Elle est écrite dans la mémoire, les 32 bits de couleur étant dans le plan image, les 8 bits de transparence étant placés dans le plan complémentaire par exemple constitué par le plan overlay.

Les 8 bits de transparence constituent soit un coefficient de transparence (transparence globale), soit un pointeur dans la table de transparence (transparence sélective).

Table de transparence

Il existe une table de transparence à 256 entrées ; elle n'est utilisée que dans le cas de transparence sélective. Cette table de 32 bits permet d'affecter un coefficient de transparence différent à chaque plan de couleur. Elle est écrite dans la mémoire dans le plan image, avec chaque coefficient dans sa couleur respective.

Les tables comme tout élément de la mémoire image sont rechargeables dynamiqement pendant l'exposition.

Utilisation des commandes Benday

Une commande benday permet de tracer une couleur pendant la durée du segment RL.

Dans le mode de réalisation de l'invention plus particulièrement décrit ici, une commande dite benday merge est prévue.

La commande benday merge oblige à certaines précautions d'utilisation.

Le segment RL benday merge doit être synchronisé avec un ou plusieurs segment RL raster.

Il démarre toujours à la même position qu'un segment RL raster, le segment RL benday merge devant être écrit avant le segment RL raster avec lequel il est synchronisé.

Dans le cas où un segment RL benday merge aurait une longueur supérieure à celle du segment RL raster associé, l'effet du segment RL benday merge se prolongera alors jusqu'au premier des événements suivants à savoir : le segment RL benday merge est fini, il y a un chargement d'un RL benday pur ou on est en fin de ligne.

La condition de fin d'un segment RL benday merge ne générera pas de rechargement du dispositif de commande, seule la fin d'un segment RL raster ou benday pur le permettant dans l'exemple de réalisation plus particulièrement décrit ici.

Pour pouvoir recharger un segment RL benday merge il faudra donc le resynchroniser avec un segment RL raster.

La somme des segments RL benday pur et des segments RL raster est toujours constante pour toutes les lignes.

Les RL benday merge étant une superposition de pixels, ils ne doivent donc pas être comptabilisés dans le calcul des RL d'une ligne.

On a représenté ci-après une commande en pseudo-code, permettant de réaliser une page comme représentée sur la figure 6.

COMMANDE

Commande RL raster :
- RASTER / BENDAY
- INCREMENT/DECREMENT des adresses pixels
- FIN de ligne
- 3 bits de spare (usage ultérieur)

Commande RL benday :
- BENDAY / RASTER
- BENDAY PURE / BENDAY MERGE
- FIN de ligne
- 3 bits format de benday :
  000 Court transparence globale
  OO1 Court transparence sélective (merge seulement)
  010 Standard transparence globale
  011 Standard transparence sélective (merge seulement)
  100 Long (transparence sélective, merge seulement)
  101,110,111 réservés pour usage ultérieur.

Sur la ligne 72 de page de document 73 décrite en mode Run Length (voir figure 6) on peut identifier 10 zones numérotées de 101 à 110:

101 - benday blanc
102 - image 74 pur
103 - benday ymck avec transparence dans image 74
104 - image 74 pur
105 - benday ymck avec transparence dans image 74
106 - image 74 pur
107 - benday ymck avec transparence dans image 74
108 - benday ymck avec transparence dans image 76
109 - image 76 pur
110 - benday blanc pur

La ligne 72 se décrira donc et par exemple ainsi :
avec :

. Y pour jaune (initiale de yellow en language anglosaxon)
. m pour magenta
. c pour cyan
. K pour noir

Les valeurs numériques correspondent au % de gamme dégradée comme cela est exprimé de façon habituelle par l'homme du métier.

101 benday pur, y = 0 m = 0 c = 0 k = 0, a1 de longueur
102 raster, a2 de longueur, pointeur pt1 (image 74, x1,y1), pxl1 de longueur du 1er pixel
103 benday merge, y = 10 m = 30 c = 50 k = 5, a3 de longueur, coef de transparence 60%
104 raster, a4 de longueur, pointeur pt2 (image 74, x2,y2), pxl2 de longueur du 1er pixel
105 benday merge, y = 10 m = 30 c = 50 k = 5, a5 de longueur, coef de transparence 60%
106 raster, a6 de longueur, pointeur pt3 (image 74, x3,y3), pxl3 de longueur du 1er pixel
107 benday merge, y = 10 m = 30 c = 50 k = 5, a7 de longueur, coef de transparence 60%
108 raster, a8 de longueur, pointeur pt4 (image 74, x4,y4), pxl4 de longueur du 1er pixel
109 raster, a9 de longueur, pointeur pt5 (image 76, x5,y5), pxl5 de longueur du 1er pixel
110 benday pur, fin de ligne, y = 0 m = 0 c = 0 k = 0, a10 de longueur

Les longueurs couvrent respectivement :

| | | |
|---|---|---|
| a1 | zone 101 | benday pur |
| a2 | zone 102 | raster |
| a3 | zone 103 | benday merge |
| a4 | zone 103 + zone 104 | raster associé + pur |
| a5 | zone 105 | benday merge |
| a6 | zone 105 + zone 106 | raster associé + pur |
| a7 | zone 107 + zone 108 | benday merge |
| a8 | zone 107 | raster associé |
| a9 | zone 108 + zone 109 | raster associé secondaire + pur |
| a10 | zone 110 | benday pur |
| a1 + a2 + a4 + a6 + a8 + a9 + a10 = dimension totale en largeur de la page en pixels de travail. | | |

On a représenté sur la figure 7 un mode de réalisation plus détaillé du dispositif 50 de la figure 4.

On a utilisé si possible les mêmes numéros qu'en référence à la figure 4, quant il s'agissait de désigner les mêmes éléments.

Comme on l'a vu, le dispositif 50 comprend une carte 51.

La carte 51 est connectée au bus 76 d'un micro-ordinateur connu en lui-même, comprenant des mémoires 77 de stockage de masse (disques durs par exemple), un microprocesseur 78 (par exemple un microprocesseur 80846 d'INTEL) et une mémoire vive 79 (RAM) par exemple de 16 mégaoctets.

Les images dont on veut extraire une ou plusieurs découpes pour les placer dans une page de document en vue de son impression ou de sa sortie sur une unité de sortie 62, sont stockées en mode bitmap dans les mémoires de masse 77.

Le micro-ordinateur est par ailleurs programmé par un utilisateur pour créer dans la mémoire 79, par exemple à l'aide du langage POSTCRIPT™ d'Adobe, une page de document en mode vectoriel, qui constitue le fichier d'instruction décrit ci-avant.

La carte 51 comprend la mémoire d'instruction 53, par exemple une mémoire RAM de 2 à 16 mégaoctets qui fonctionnera par exemple en mode FIFO, et dans laquelle vont être stockées les instructions de commande de transformation (du type COMMAND RASTER, COMMAND BENDAY MERGE, etc, décrites ci-avant).

La carte 51 comprend une unité 80 représentée en trait interrompu sur la figure 7, par exemple constituée par un microprocesseur agencé pour remplir les fonctions décrites.

L'unité 80 comprend un circuit décodeur d'instructions 81 qui transmet la résolution en pixels de travail définie dans les instructions, aux circuits de calcul 82 et 83, respectivement de la longueur en pixel de travail d'un pixel d'entrée d'image et de la longueur en pixel de travail d'un benday.

La taille du premier pixel est sélectionnée en 85, puis calculée en 86, de façon à sélectionner en 87 la taille du pixel dit actif qui est alors envoyé vers l'unité de sortie 62 via un circuit intermédiaire 88 dit "réplicateur de pixel".

Des itérations sont effectuées en 89, avec passage à une nouvelle ligne s'il y a lieu (indexation repérée en 90 sur la figure 7), jusqu'à épuisement des calculs. Le circuit 81 décodeur d' instruction attaque également une unité 91 de calcul, génératrice d'adresse pour les pixels dont les tailles sont calculées, et une unité 92, dite séquenceur de pixel qui commande les unités 82, 83, 91.

Les adresses calculées en 91 sont envoyées dans la mémoire image 56 (RAM) qui contient le fichier constituant l'espace virtuel mémoire d'image, auquel est adjoint un fichier complémentaire, par exemple le fichier overlay 93, dans lequel sont stockées lesdites adresses.

La mémoire image 56 a été chargée en 94 via le bus 76 de l'ordinateur, à partir des fichiers de data stockés en mémoire de masse 77.

La mémoire image 56 peut alimenter directement le circuit 88 via un circuit 95 qui sélectionne l'attribut du pixel actif, essentiellement la taille qui a été calculée via 87, ou peut l'alimenter via le circuit mélangeur image/benday 57 (représenté en traits interrompus sur la figure 7).

Le circuit 57 comprend des registres 96 et 97, correspondant au benday et au coefficient de transparence à appliquer audit benday, qui sont envoyés dans le circuit 88 via un circuit ou une unité 98, dite de "mélange de pixel" par fusion ou superposition avec les pixels 99 venant du fichier 56.

Les pixels 100 à exposer et leurs attributs 100' sont alors envoyés vers l'unité 62.

Comme il va de soi et comme il résulte de ce qui précède, la présente invention n'est pas limitée au mode de réalisation plus particulièrement décrit mais en concerne au contraire toutes les variantes à la portée de l'homme du métier.

**Revendications**

1. Procédé informatique de montage, dans une page (10) de document, d'au moins une découpe (11, 12, 12a) d'image, ladite image étant stockée dans un fichier (11'', 12'') en mode bitmap dit fichier de data, selon une première résolution dite résolution en pixels d'entrée,
   ladite page de document étant préalablement décrite dans un fichier spécifique (13) en mode vectoriel dit premier fichier d'instructions,
   caractérisé en ce que
   - on place chaque image dans un espace virtuel mémoire d'image (15), en affectant au début du fichier data correspondant à ladite image une adresse dans ledit espace virtuel mémoire d'image,
   - on transforme (16) la description de la page de document décrite en mode vectoriel dans le premier fichier d'instructions (13), en une description en mode Run Length stockée dans un second fichier d'instructions (17), avec une résolution dite résolution de travail,
   - on calcule (18) la taille de chaque pixel d'entrée de la découpe d'image à mettre en place, en nombre de pixels correspondant à ladite résolution de travail, dits pixels de travail, que l'on stocke dans un fichier dit fichier complémentaire (19),
   - on calcule (20) l'adresse dans l'espace virtuel mémoire d'image (15) du pixel d'entrée, dit premier pixel d'entrée, situé au début de chaque segment de ladite découpe dont la longueur en mode Run Length est définie en pixel de travail, et
   - pour chaque segment, on ajuste (23) la taille dudit premier pixel d'entrée en lui donnant une dimension en pixels de travail correspondant à la longueur de la portion de segment comprise entre le début dudit segment et le début du pixel d'entrée suivant ledit premier pixel d'entrée, le chemin de progression à l'intérieur dudit segment pour obtenir les pixels d'entrée suivants ayant été préalablement défini (24),

     de sorte que la position de ladite découpe d'image décrite en mode Run Length est ainsi parfaitement définie dans la dite page de document.

2. Procédé selon la revendication 1, caractérisé en ce que, à chaque calcul d'adresse et ajustement de taille d'un premier pixel d'entrée, on envoie ledit premier pixel d'entrée et les pixels suivants dudit segment décrit en mode Run Length sur une unité de sortie.

3. Procédé selon la revendication 1, caractérisé en ce que, à chaque calcul d'adresse et ajustement de taille d'un premier pixel d'entrée, on stocke ledit premier pixel d'entrée et les pixels suivants dudit segment décrit en mode Run Length dans un fichier intermédiaire.

4. Procédé selon l'une quelconque des revendications précédentes, caractérisé en ce que, la page de document comprenant également au moins un benday, on calcule l'adresse du début de chaque ligne dudit benday, dans un espace virtuel extrait du second fichier d'instructions englobant ledit benday,
de sorte que la position dudit benday décrit en mode Run Length est également parfaitement définie dans la page de document.

5. Procédé selon la revendication 4, caractérisé en ce que on superpose au moins en partie un benday à une découpe d'image, en affectant à un segment de découpe d'image en mode Run Length une couleur ainsi qu'un coefficient de transparence pour permettre la fusion de l'image de la découpe avec ladite couleur.

6. Procédé selon l'une quelconque des revendications précédentes, caractérisé en ce que on effectue un traitement algorithmique sur les adresses des premiers pixels d'entrée de la découpe d'image ou des débuts de ligne du benday.

7. Procédé selon l'une quelconque des revendications précédentes, caractérisé en ce que on effectue un traitement algorithmique sur le chemin de progression à l'intérieur des segments de découpe d'image.

8. Procédé selon l'une quelconque des revendications précédentes, caractérisé en ce que on effectue un traitement algorithmique sur la taille des pixels d'entrée.

9. Application du procédé selon l'une quelconque des revendications précédentes au montage de page de dimensions supérieure à $1m^2$, avec une résolution supérieure ou égale à 1200 ppp.

10. Application du procédé selon l'une quelconque des revendications 1 à 9 à l'imposition.

11. Application du procédé selon l'une quelconque des revendications 1 à 10 au grossissement / amaigrissement.

12. Dispositif informatique de montage, dans une page (10) de document, d'au moins une découpe (11,12,12a) d'image (11',12'), ladite image étant stockée dans un fichier (11'',12'') en mode bitmap dit fichier de data, selon une première résolution dite résolution en pixels d'entrée,
ladite page de document étant préalablement décrite dans un fichier spécifique (13) en mode vectoriel dit premier fichier d'instructions,
caractérisé en ce que il comporte
    - des moyens (81,91,92) pour stocker chaque image dans un espace virtuel mémoire d'image (56), en affectant au début du fichier data correspondant à ladite image une adresse dans ledit espace virtuel mémoire d'image,
    - des moyens de transformation de la description de la page de document décrite en mode vectoriel dans le premier fichier d'instructions, en une description en mode Run Length stockée dans un second fichier d'instructions, avec une résolution dite résolution de travail,
    - des moyens (82) de calcul de la taille de chaque pixel d'entrée de la découpe d'image à mettre en place, en nombre de pixels correspondant à ladite résolution de travail, dits pixels de travail, et des moyens de stockage de ladite taille dans un fichier dit fichier complémentaire,
    - des moyens (91) de calcul de l'adresse, dans l'espace virtuel mémoire d'image, du pixel d'entrée, dit premier pixel d'entrée, situé au début de chaque segment de ladite découpe dont la longueur en mode Run Length est définie en pixel de travail,
    - des moyens (86) propres à ajuster la taille dudit premier pixel d'entrée en lui donnant une dimension en pixels de travail correspondant à la longueur de la portion de segment comprise entre le début dudit segment et le début du pixel d'entrée suivant ledit premier pixel d'entrée, et

- des moyens (53) pour définir pour chaque segment un chemin de progression du dit segment pour obtenir les pixels d'entrée suivants dudit premier pixel d'entrée,
  de sorte que la position de ladite découpe d'image décrite en mode Run Length est ainsi parfaitement définie dans la dite page de document.

**13.** Dispositif selon la revendication 12, caractérisé en ce que il comporte de plus une unité (62) de sortie en direct, à chaque calcul d'adresse et ajustement de taille d'un premier pixel d'entrée, dudit premier pixel d'entrée et des pixels suivants dudit segment décrit en mode Run Length.

**14.** Dispositif selon la revendication 12, caractérisé en ce que il comporte de plus des moyens de stockage (88), à chaque calcul d'adresse et ajustement de taille d'un premier pixel d'entrée, dudit premier pixel d'entrée et des pixels suivants dudit segment décrit en mode Run Length dans un fichier intermédiaire.

**15.** Dispositif selon l'une quelconque des revendications 12 à 14, caractérisé en ce que, la page de document comprenant également au moins un benday, il comporte des moyens (83) de calcul de l'adresse du début de chaque ligne dudit benday, dans un espace virtuel extrait du second fichier d'instructions englobant ledit benday, de sorte que la position dudit benday décrit en mode Run Length est également parfaitement définie dans la page de document.

**16.** Dispositif selon la revendication 15, caractérisé en ce que il comporte des moyens (57) de superposition d'au moins une partie de benday avec une découpe d'image, agencés pour affecter à un segment décrivant une découpe d'image en mode Run Length une couleur ainsi qu'un coefficient de transparence pour permettre la fusion de la découpe d'image avec ladite couleur.

**17.** Dispositif selon l'une quelconque des revendications 12 à 16, caractérisé en ce que il comporte de plus des moyens de traitement algorithmique des adresses des premiers pixels d'entrée de la découpe d'image ou des débuts de ligne du benday.

**18.** Dispositif selon l'une quelconque des revendications 12 à 17, caractérisé en ce que il comporte de plus des moyens de traitement algorithmique du chemin de progression.

**19.** Dispositif selon l'une quelconque des revendications 12 à 18, caractérisé en ce que il comporte de plus des moyens de traitement algorithmique de la taille des pixels d'entrée.

**20.** Dispositif selon l'une quelconque des revendications précédentes agencé pour permettre le montage de page de dimensions supérieure à $1m^2$ avec une résolution supérieure ou égale à 1200 ppp.

**21.** Dispositif selon l'une quelconque des revendications précédentes agencé pour l'imposition.

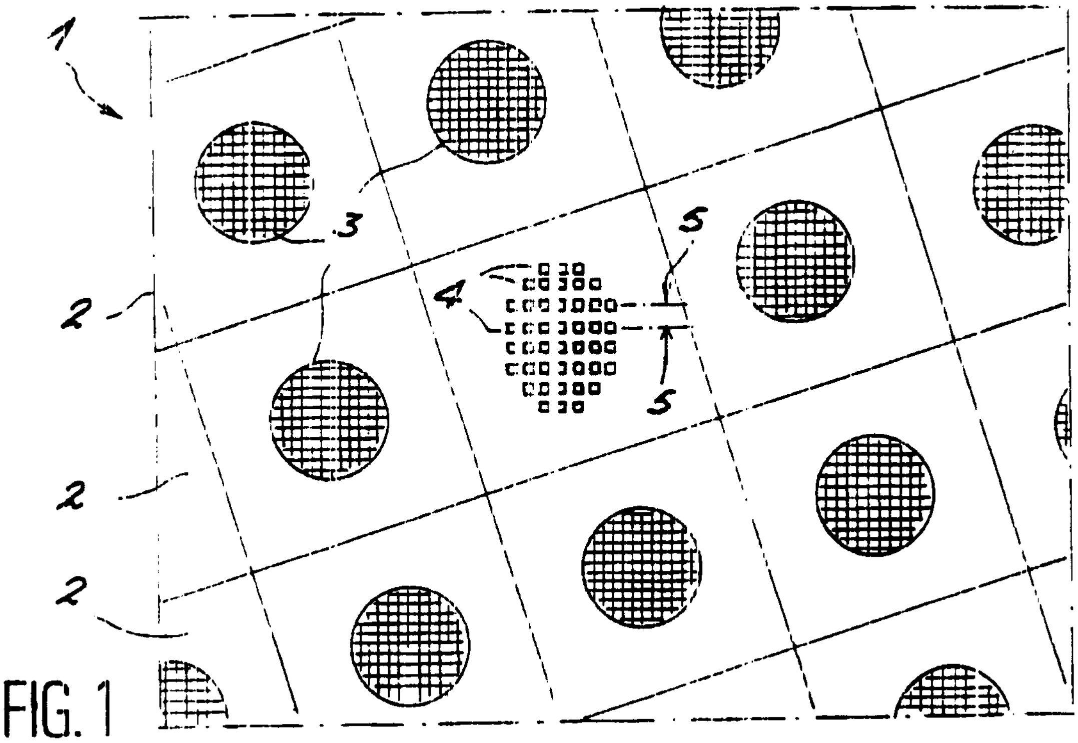


FIG. 1

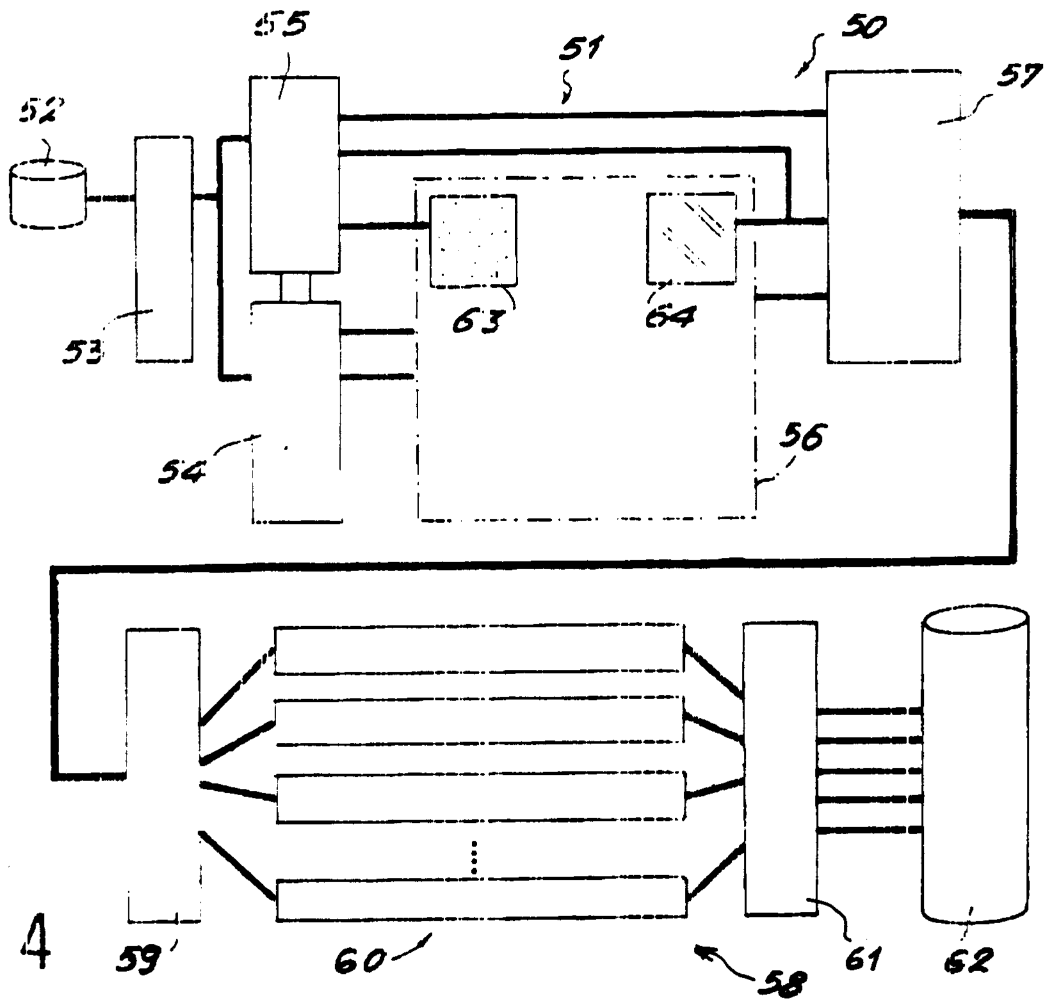


FIG. 4

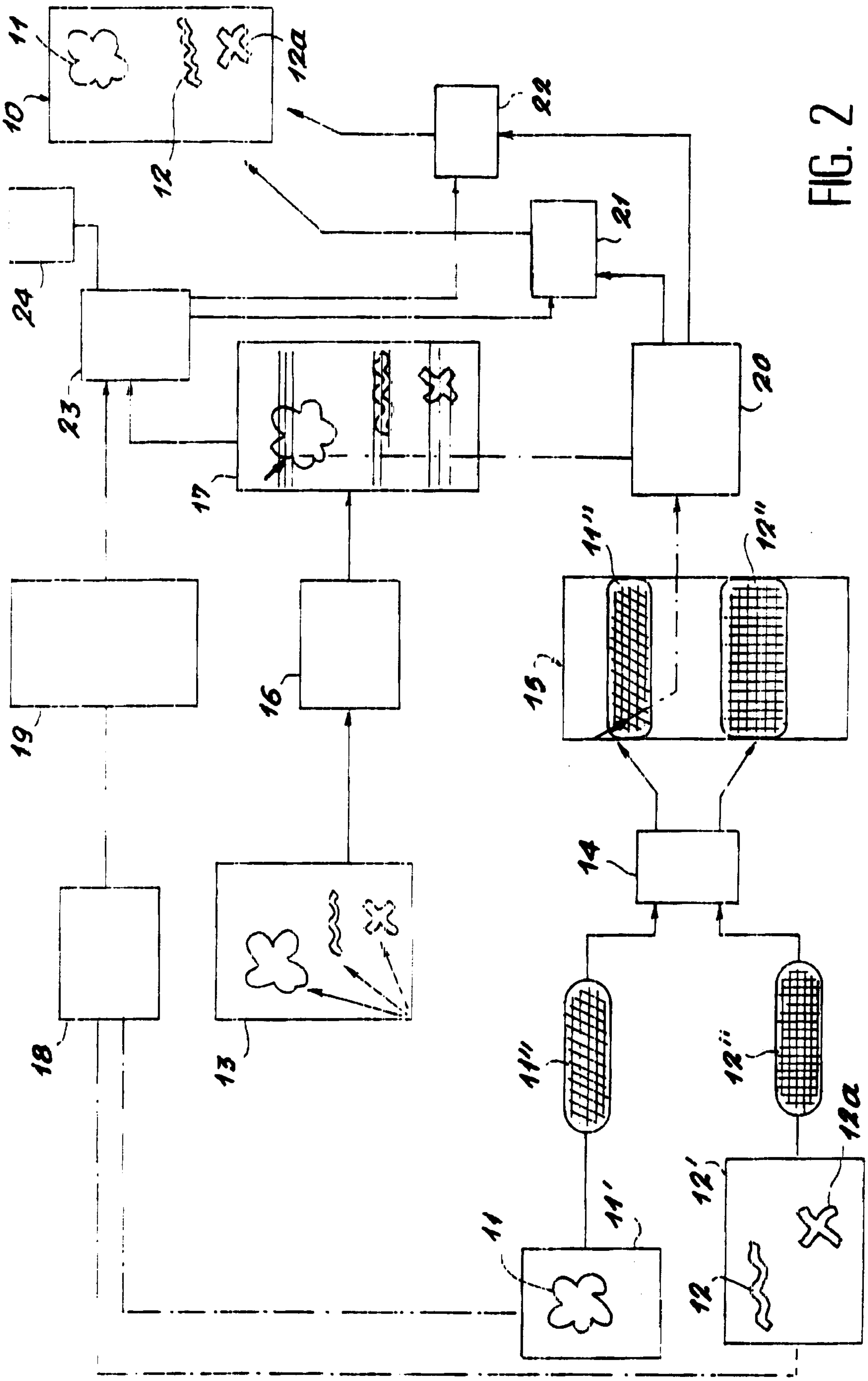

FIG. 2

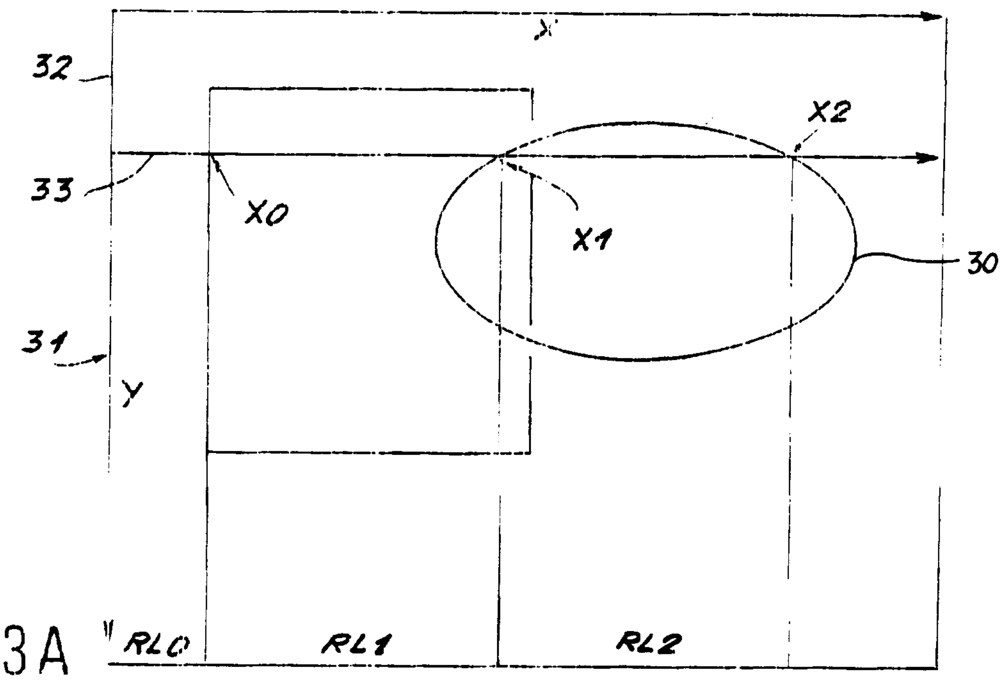


FIG. 3 A

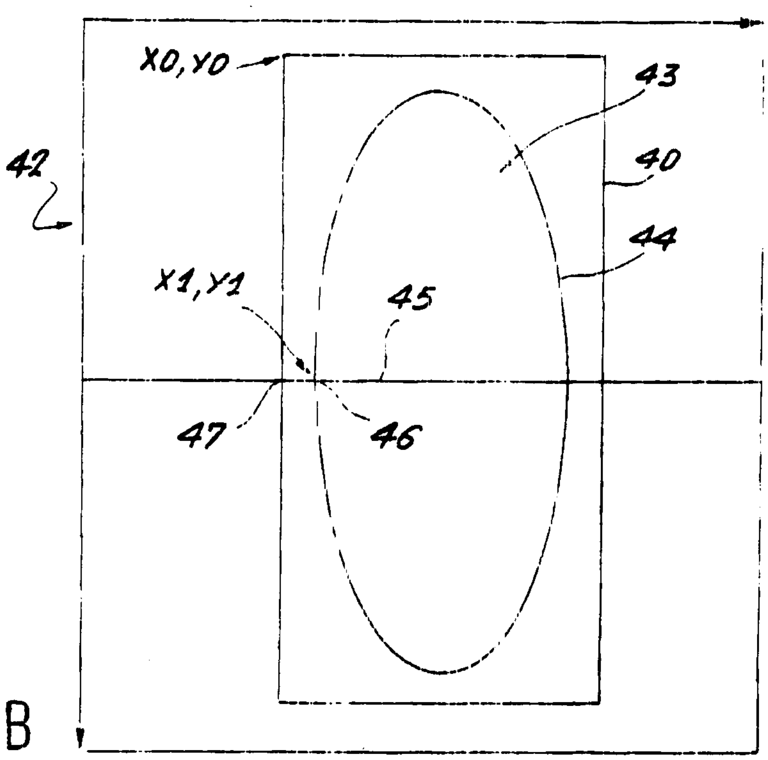


FIG. 3 B

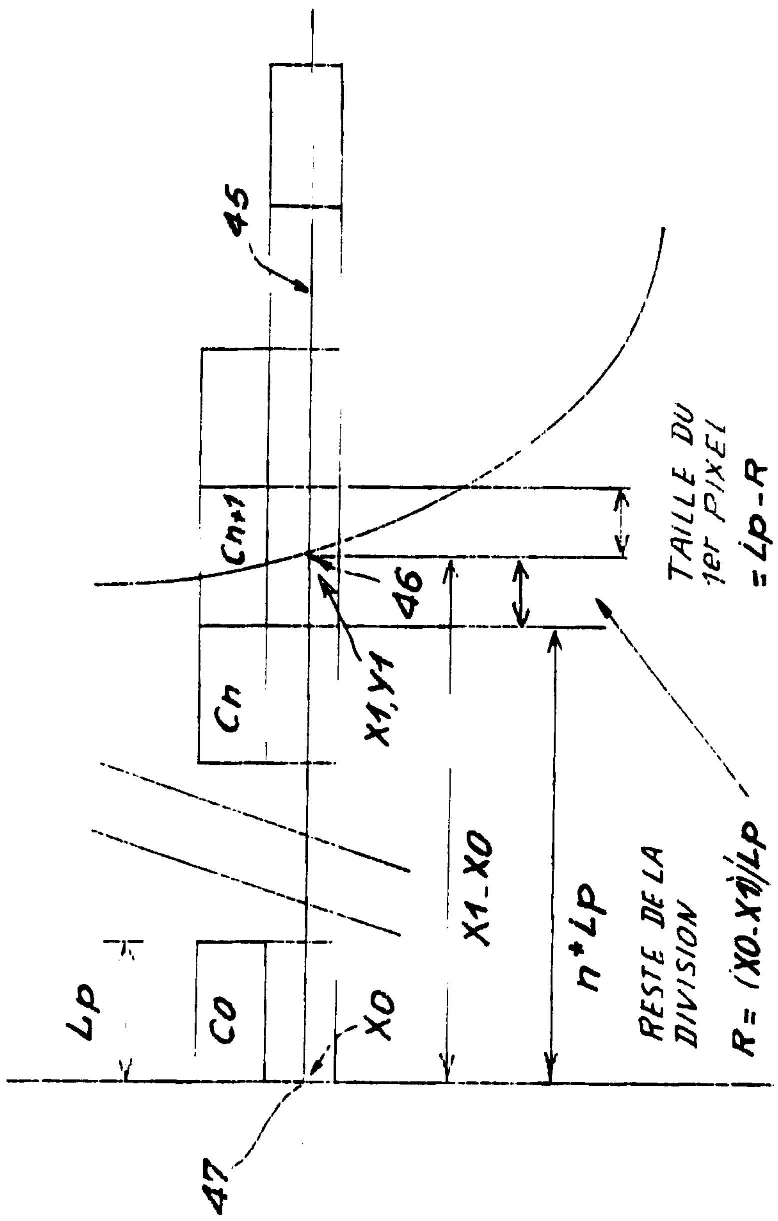
45
Cn+1
46
Cn
X1,Y1
X1_X0
n*Lp
Lp
C0
X0
47
RESTE DE LA
DIVISION
R= (X0.X1)/Lp
TAILLE DU
1er PIXEL
= Lp-R

FIG. 3C

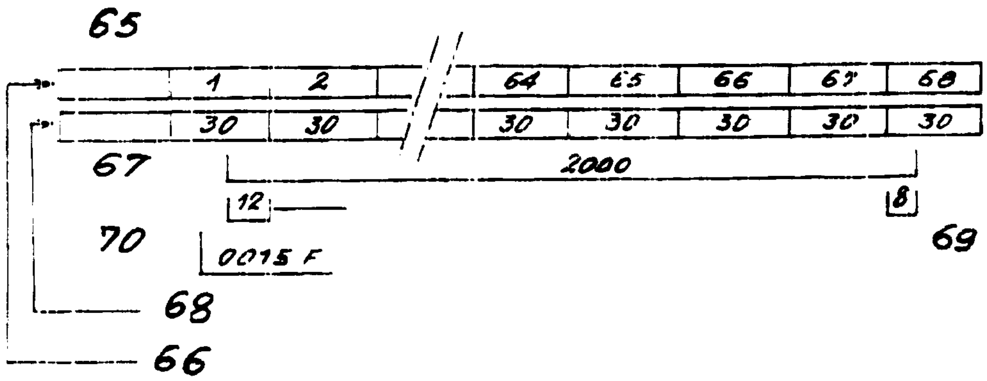
65
1
2
64
65
66
67
68
30
30
30
30
30
30
30
67
2000
12
8
70
0015 F
69
68
66

FIG. 5

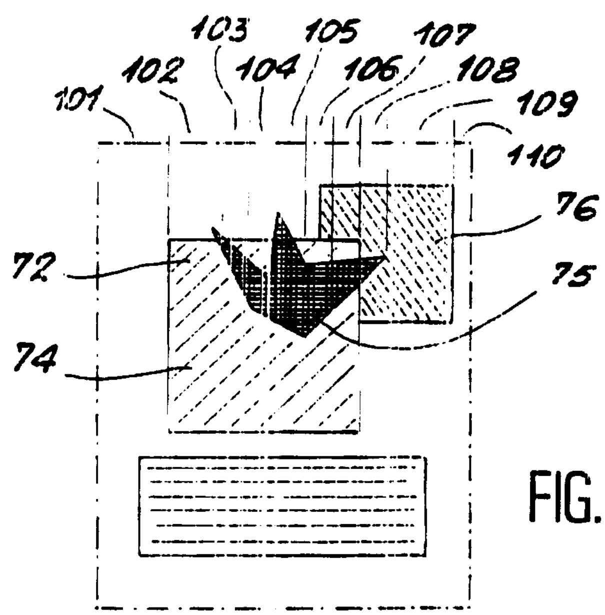
101
102
103
104
105
106
107
108
109
110
76
72
75
74

FIG. 6

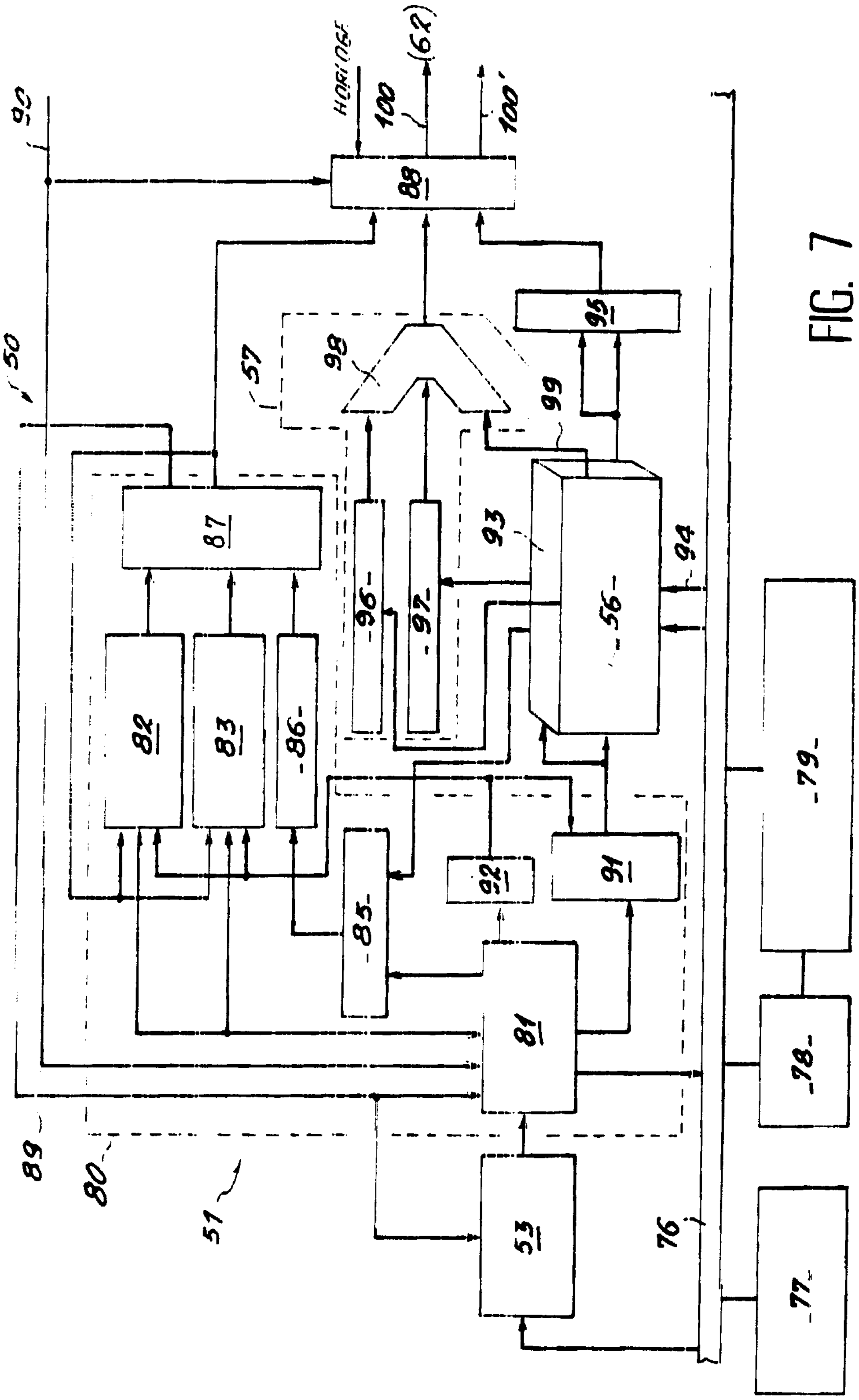

HORLOGE
100
(62)
100'
90
88
50
57
98
95
99
87
93
94
56
96
97
82
83
86
85
92
91
81
79
78
77
76
53
51
80
89


FIG. 7

European Patent Office

# EUROPEAN SEARCH REPORT

Application Number
EP 93 40 1203

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | WO-A-92 15958 (AUTOGRAPHIX) 17 September 1992<br>* page 3, line 3 - line 10 *<br>* page 7, line 9 - line 13; claims 1,4-6 *<br>--- | 1,12 | G06F15/72 |
| A | EUROGRAPHICS'91 2 September 1991 , AUSTRIA pages 275 - 289 XP300271<br>SAMRA ET AL. 'constructive page description opening up the prepress world'<br>--- | | |
| A | EP-A-0 476 627 (DAINIPPON CREEN) 25 March 1992<br>--- | | |
| A | EP-A-0 320 014 (FUJI PHOTO FILM) 14 June 1989<br>----- | | |

TECHNICAL FIELDS SEARCHED (Int.Cl.5)

G06F

The present search report has been drawn up for all claims

| Place of search | Date of completion of the search | Examiner |
|---|---|---|
| THE HAGUE | 26 May 1994 | Perez Molina, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document